# EUROPÄISCHE PATENTSCHRIFT

(11) **EP 3 033 187 B1**
(45) Veröffentlichungstag und Bekanntmachung des Hinweises auf die Patenterteilung: **29.08.2018**
(21) Anmeldenummer: 13753524.1
(22) Anmeldetag: 16.08.2013
(51) Int. Cl.: B21D 43/05

(54) **TRANSFERVORRICHTUNG FÜR EIN WERKSTÜCK**
TRANSFER DEVICE FOR A WORKPIECE
DISPOSITIF DE TRANSFERT D'UNE PIÈCE

(43) Veröffentlichungstag der Anmeldung: 22.06.2016
(73) Patentinhaber: Güdel Group AG, 4900 Langenthal (CH)
(72) Erfinder: ZULAUF, Walter, CH-4937 Ursenbach (CH); SCHÄR, Dominique, CH-4053 Basel (CH); GERBER, Markus, CH-3362 Niederönz (CH)
(74) Vertreter: Keller & Partner Patentanwälte AG
(86) Internationale Anmeldenummer: PCT/CH2013/000142
(87) Internationale Veröffentlichungsnummer: WO 2015/021564

(56) Entgegenhaltungen:
- DE-A1-102006 003 522
- DE-A1-102012 009 108
- JP-A- 2011 031 268
- US-A1- 2008 085 178

## Beschreibung

### Technisches Gebiet

Die Erfindung betrifft eine Transfervorrichtung, insbesondere zum Transferieren von Werkstücken zwischen Werkzeugen von zwei benachbarten Pressen sowie eine Anordnung mit mindestens einer ersten Presse und mindestens einer zweiten Presse sowie einer Transfervorrichtung.

### Stand der Technik

Derartige Transfervorrichtungen und Anordnungen sind bekannt;
DE 10 2012 009 108 A1 (Aida Engineering Ltd.) offenbart eine Transfervorrichtung mit einem Rahmen und einem ersten Schwenkarm, der relativ zum Rahmen schwenkbar gelagert ist. Der erste Schwenkarm ist über einen Antrieb gegenüber dem Rahmen auf- und ab bewegbar. Am ersten Schwenkarm ist ein zweiter Schwenkarm angebracht, welcher gegenüber dem ersten Schwenkarm schwenkbar und in Längsrichtung desselben bewegbar montiert ist. An einem Ende des zweiten Schwenkarmes ist eine Halteeinrichtung für ein Werkzeug schwenkbar angebracht.

US 7,128,198 (Komatsu Ltd.) beschreibt eine Transfervorrichtung mit einem Schwenkelement, wobei ein Querträger durch einen Linearbewegungsmechanismus an diesem beweglich befestigt ist. Am Querträger ist eine Werkstückhaltevorrichtung angebracht. Das Schwenkelement ist pendelnd angetrieben, wobei durch den Linearbewegungsmechanismus der relative Abstand zwischen der Pendelmitte des Schwenkelements und dem Querträger veränderlich ist.

DE 198 51 746 A1 (Schuler Pressen GmbH & Co.) offenbart eine Transfervorrichtung für den Transfer von Werkstücken in Mehrstufenpressen. Die Transfervorrichtung verfügt über ein steuerbares Werkstückhaltemittel sowie ein Getriebe mit einem Schwenkarm, der mit dem Werkstückhaltemittel verbunden ist. Die Schwenkachse des Schwenkarmes ist dabei von der Vertikalen abweichend orientiert, insbesondere steht diese rechtwinklig dazu.

JP 2011-031268 A offenbart eine Transfervorrichtung für Werkstücke zwischen zwei Pressen und umfasst einen horizontalen sowie eine vertikalen Ausleger. Ein Schwenkarm ist verschiebbar auf dem horizontalen wie auch auf dem vertikalen Ausleger gelagert, wobei beiderorts ein Drehlager angeordnet ist. Der Antrieb des Schwenkarms erfolgt über den horizontalen Ausleger mittels z. B. eines Linearantriebs. Bei einer Ausführungsform kann der Schwenkarm zusätzlich am Drehlager auf dem vertikalen Ausleger linear verschoben werden, damit Korrekturen des Schwenkwinkels ausgeführt werden können.

US 2008/0085178 A1 offenbart eine Kabelhalterung für eine Transfervorrichtung, welche zwischen zwei Pressen angeordnet ist. In einem Ausführungsbeispiel wird eine Schwenkvorrichtung offenbart, welche einen Stützbalken sowie einen Schwenkarm umfasst, wobei der Schwenkarm schwenkbar mit dem Stützbalken verbunden ist. Der Schwenkarm verfügt über eine Haltevorrichtung für ein Werkstück. Der Antrieb des Schwenkarms erfolgt über einen Schwenkhebel, der mit dem Schwenkarm verbunden ist und über einen Linearantrieb in oszillierende Bewegungen versetzt wird. Die vorbekannten Transfervorrichtungen weisen den Nachteil auf, dass diese aufgrund ihrer Kinematik nur eine begrenzte Transfergeschwindigkeit von Werkstücken erlauben,

### Darstellung der Erfindung

Aufgabe der Erfindung ist es demnach, eine dem eingangs genannten technischen Gebiet zugehörende Transfervorrichtung zu schaffen, welche einen effizienten und schnellen Transfer von Werkstücken ermöglicht und dabei möglichst einfach aufgebaut ist.

Die Lösung der Aufgabe ist durch die Merkmale des Anspruchs 1 definiert. Gemäss der Erfindung umfasst die Transfervorrichtung einen Rahmen sowie einen ersten Schwenkarm mit einem ersten Ende und einem zweiten Ende, Der Schwenkarm ist am ersten Ende über eine erste Drehachse schwenkbar mit dem Rahmen verbunden. Die Transfervorrichtung verfügt über einen ersten Schlitten, der auf dem Schwenkarm auf einer ersten Linearachse linear verschiebbar angeordnet ist. Mit diesem Schlitten ist eine Halteeinrichtung für ein Werkstück über eine dritte Drehachse drehbar verbunden. Weiter ist am Rahmen eine im Wesentlichen horizontal verschiebbar gelagerte zweite Drehachse angeordnet, wobei der Schwenkarm in einem Bereich, der vom ersten Ende her in Richtung des zweiten Endes liegt, drehbar mit dieser zweiten Drehachse verbunden ist.

Die erfindungsgemässe Transfervorrichtung ist insbesondere zum Transferieren von Werkstücken zwischen Werkzeugen von zwei benachbarten Pressen geeignet, wobei keine Zwischenablage des Werkstücks nötig ist. Eine derartige Transfervorrichtung wird vorzugsweise in Mehrstufenpressen verwendet, wo Werkstücke in mehreren Umformschritten bearbeitet werden. Beispielsweise werden Karroserieteile in mehreren aufeinanderfolgenden Pressschritten aus ebenen Blechtafeln hergestellt. Dazu weisen Karroseriepressen mehrere Pressestufen auf, zwischen denen die Werkstücke umgesetzt werden müssen.

Der Rahmen bildet eine Grundeinheit, an welcher die weiteren Teile der Transfervorrichtung angebracht sind. Der Rahmen kann dabei jede geeignete Form und Grösse aufweisen. Insbesondere ist der Rahmen oberhalb der Werkzeuge der Pressen ortsfest befestigbar. Alternativ kann der Rahmen als Laufkatze oder Schlitten ausgebildet sein, um auf einem entsprechenden Träger oder einer Schiene zwischen zwei Pressen verfahrbar angeordnet werden zu können. Weiter kann der Rahmen auch schwenkbar zwischen Pressen angeordnet werden. Ferner können auch mehr als nur eine erfindungsgemässe Vorrichtung an demselben Rahmen angeordnet sein.

Als "Drehachse" wird im Rahmen dieser Anmeldung eine Achse verstanden, um welche eine bestimmte Komponente der Vorrichtung dreh- oder schwenkbar ist. Die Drehachse kann aktiv angetrieben werden oder auch lediglich passiv sein.

Unter "Linearachse" wird im Rahmen dieser Anmeldung eine Achse verstanden, entlang der eine Komponente der Vorrichtung linear verschiebbar ist.

"Im Wesentlichen in horizontaler Richtung linear verschiebbar" bedeutet im Rahmen dieser Anmeldung, dass die zweite Drehachse in einer Richtung, welche rechtwinklig zur Wirkrichtung der Schwerkraft liegt, bewegbar ist. Vorzugsweise erfolgt diese Bewegung linear. Alternativ kann jedoch auch vorgesehen sein, dass diese Bewegung kreisbogenförmig ausgeführt wird. Die zweite Drehachse wird entsprechend auf dem Rahmen geführt, beispielsweise über eine Führungsschiene oder eine Führungsnut.

Der erste Schlitten ist insbesondere über mindestens eine Schiene oder mindestens eine Führungsnut auf dem ersten Schwenkarm linear geführt. Derartige Linearführungen sind einem Fachmann auf dem Gebiet bekannt.

Als Halteeinrichtung werden insbesondere sogenannte Saugerbrücken verwendet, welche durch einen Querträger mit daran angebrachten Saugmitteln ausgebildet sind. Derartige Saugbrücken sind einem Fachmann auf dem Gebiet ebenfalls einschlägig bekannt, Alternativ können auch andere Haltemittel verwendet werden, wie beispielsweise Elektromagneten oder Greifer. Die Art der Haltemittel kann demnach je nach Art der zu transferierenden Werkstücke angepasst werden.

Bei der erfindungsgemässen Anordnung ist der erste Schwenkarm über zwei Drehachsen mit dem Rahmen verbunden. Dabei ist es möglich, die Schwenkbewegung des Schwenkarmes über die beiden Drehachsen präzise und steif zu führen, Ferner lässt sich auch die Hebelwirkung auf den ersten Schwenkarm reduzieren.

Auch kann bei der erfindungsgemässen Vorrichtung eine hohe Beschleunigung der Halteeinrichtung erreicht werden, so dass der Zeitbedarf für den Transfer eines Werkstücks von einer Presse zur anderen reduziert werden kann.

Vorzugsweise ist die erste Drehachse relativ zum Rahmen im Wesentlichen in vertikaler Richtung verschiebbar angeordnet.

"Im Wesentlichen in vertikaler Richtung verschiebbar" bedeutet im Rahmen der vorliegenden Anmeldung, dass die erste Drehachse in einer Richtung, welche im Wesentlichen der Wirkrichtung der Schwerkraft entspricht, sowohl nach oben wie auch nach unten bewegbar ist. Die Bewegung ist dabei vorzugsweise linear, kann jedoch in einer besonders bevorzugten Ausführungsform auch bogenförmig erfolgen, d.h. die Bewegung hat sowohl eine vertikale wie auch eine horizontale Komponente. Insbesondere bevorzugt erfolgt die Bewegung in Form eines Kreisbogens oder eines Kreisbogensegments.

Dies ermöglicht eine besonders einfache Ausgestaltung der Vorrichtung, da der erste Schwenkarm nicht als Teleskoparm ausgebildet sein muss, um die Schwenkbewegung zu ermöglichen. Alternativ kann auch die erste Drehachse starr auf dem Rahmen angebracht sein und der erste Schwenkarm relativ zur zweiten Drehachse in Längsrichtung verschiebbar angeordnet sein. Alternativ kann auch eine Kombination der beiden Ausführungsformen verwendet werden, also eine im Wesentlichen vertikal verschiebbare erste Drehachse sowie ein relativ zur zweiten Drehachse in Längsrichtung verschiebbar gelagerter erster Schwenkarm.

Bevorzugt sind die erste Drehachse sowie die zweite Drehachse parallel zueinander angeordnet. Dadurch erfolgt die Bewegung des ersten Schwenkarmes in einer Ebene, welche insbesondere bevorzugt im Wesentlichen vertikal, d.h. in Wirkrichtung der Schwerkraft ausgerichtet ist. Erfindungsgemäß ist der erste Schwenkarm über die erste Drehachse relativ zu einem zweiten Schwenkarm drehbar gelagert. Dabei ist der zweite Schwenkarm über eine vierte Drehachse drehbar auf dem Rahmen gelagert, wobei die vierte Drehachse vorzugsweise parallel zur ersten Drehachse steht.

Durch diese Anordnung lässt sich die im Wesentlichen vertikale Verschiebung der ersten Drehachse durch zwei einfach ausgestaltete Drehachsen realisieren, wobei im Sinne eines Exzenters die zwei rotatorischen Bewegungen der Drehachsen in eine translatorische Bewegung des ersten Schwenkarmes umgewandelt werden. Da bei dieser Ausführungsform keine Linearführung sowie kein Linearantrieb für das vertikale Verschieben der ersten Drehachse vorgesehen sein muss, lässt sich die erfindungsgemässe Vorrichtung relativ einfach konstruieren. Zudem kann dadurch die Dimension des Rahmens reduziert werden, da anstatt eines relativ langen Linearlagers ein wesentlich kürzerer zweiter Schwenkarm eingesetzt werden kann. Beispielsweise kann ein Linearlager von 1100 mm Länge durch einen zweiten Schwenkarm von lediglich 300 mm ersetzt werden.

Die vierte Drehachse ist insbesondere bevorzugt als Planetengetriebe ausgebildet, weiches über einen Servomotor angetrieben wird. Alternativ kann die vierte Drehachse einen Torquemotor aufweisen. Über diese Anordnung lässt sich der zweite Schwenkarm besonders einfach und effizient antreiben. Alternativ kann die vierte Drehachse jedoch auch anders ausgebildet sein, z.B. als Wälzlager für eine Welle, welche von einem Motor angetrieben wird.

Vorzugsweise ist die erste Drehachse als Wälzlager, insbesondere als Kugellager ausgebildet. Wälzlager sind einfach und günstig herzustellen. Ferner weisen diese einen niedrigen Verschleiss auf. Dadurch kann die erfindungsgemässe Vorrichtung robust und kostengünstig hergestellt werden. Alternativ kann die erste Drehachse jedoch auch anders ausgebildet sein, z.B. als Gleitlager. Ferner könnte die erste Drehachse auch ein Getriebe umfassen, beispielsweise ein Planetengetriebe.

Die erste Drehachse verfügt vorzugsweise über keinen Antrieb. Eine Schwenkbewegung des ersten Schwenkarmes erfolgt damit rein über die lineare Verschiebung der zweiten Drehachse. Dies ermöglicht eine besonders einfache Ausgestaltung der Transfervorrichtung sowie eine präzise und steife Kontrolle der Bewegung des ersten Schwenkarmes.

Besonders bevorzugt erfolgt der Antrieb des ersten Schwenkarmes über eine koordinierte Bewegung der zweiten und der vierten Drehachse, wobei die erste Drehachse passiv mitläuft. Dadurch lässt sich eine sehr präzise, steife Führung des ersten Schwenkarmes bei gleichzeitiger einfacher mechanischer Ausgestaltung der Transfervorrichtung ermöglichen.

Besonders bevorzugt ist die zweite Drehachse auf einem zweiten Schlitten angeordnet, welcher über mindestens einen Linearantrieb entlang einer zweiten Linearachse im Wesentlichen in horizontaler Richtung relativ zum Rahmen verfahrbar ist.

Dies ermöglicht eine präzise Führung der im Wesentlichen horizontalen Bewegung der zweiten Drehachse. Die zweite Drehachse ist besonders bevorzugt als auf dem Schlitten angeordnetes Wälzlager ausgestaltet. Alternativ kann die zweite Drehachse auch als Robotergetriebe ausgestaltet sein.

Der zweite Schlitten ist vorzugsweise auf entsprechenden Schienen oder einer Führungsnut auf einer vorzugsweise linearen Bahn geführt. Als Linearantrieb kann beispielsweise ein Seilzug, eine Gewindestange oder ein Hydraulik- oder Pneumatikzylinder verwendet werden.

Insbesondere bevorzugt ist der zweite Schlitten über zwei Linearantriebe, welche vorzugsweise unabhängig voneinander sind, relativ zum Rahmen verfahrbar. Die Verwendung von zwei unabhängigen Linearantrieben ermöglicht eine grosse Redundanz des Systems. Ausserdem lässt sich die Bewegung des ersten Schwenkarms mit zwei Linearantrieben sehr gut kontrollieren, wobei unbeabsichtigte Schwenkbewegungen des ersten Schwenkarmes, die durch das Eigengewicht des ersten Schwenkarmes ausgelöst werden können, durch zwei Antriebe effizienter und zuverlässiger verhindert werden können, als dies bei nur einem Linearantrieb möglich wäre.

Besonders bevorzugt wird als Linearantrieb des zweiten Schlittens jedoch mindestens ein Zahnriemen verwendet, der über einen Servomotor angetrieben wird. Durch die Verwendung eines Zahnriemens in Verbindung mit einem Servomotor lässt sich die translatorische Bewegung des zweiten Schlittens sehr präzise kontrollieren. Zudem sind der Wartungs- sowie Reparaturaufwand für eine derartige Ausgestaltung relativ gering. Ferner lässt sich dadurch der Antrieb vom zweiten Schlitten auf den Rahmen verlagern, womit das zu bewegende Gewicht des zweiten Schlittens reduziert werden kann.

Bei der Verwendung von zwei Zahnriemen als Antrieb des zweiten Schlittens verfügen beide Zahnriemen vorzugsweise über mindestens eine gemeinsame Welle, auf welche mindestens eine Sicherheitsbremse einwirkt. Durch das Vorsehen einer gemeinsamen Welle sowie einer zusätzlichen Sicherheitsbremse kann eine unbeabsichtigte Schwenkbewegung des ersten Schwenkarmes zuverlässig verhindert werden, was insgesamt die Sicherheit der erfindungsgemässen Transfervorrichtung erhöht.

Vorzugsweise ist die Halteeinrichtung über die dritte Drehachse drehbar an einem dritten Schwenkarm angeordnet, welcher über eine fünfte Drehachse drehbar am ersten Schwenkarm gelagert ist, wobei die dritte Drehachse und die fünfte Drehachse parallel zur ersten Drehachse sind.

Durch den dritten Schwenkarm kann eine höhere Flexibilität der Transfervorrichtung erreicht werden, da der zusätzliche Schwenkarm der Vorrichtung einen zusätzlichen Freiheitsgrad verleiht. Dadurch kann die Halteeinrichtung besser in Werkzeuge von Pressen positioniert werden, um bearbeitete Werkstücke zu erfassen. Alternativ kann eine erfindungsgemässe Transfervorrichtung noch über weitere Schwenkarme verfügen, welche gelenkig zwischen dem dritten Schwenkarm und der Halteeinrichtung angeordnet sind.

Bevorzugt ist die dritte Drehachse als Robotergetriebe ausgebildet. Das Robotergetriebe ist weiter bevorzugt über einen Servomotor angetrieben.

Ein durch einen Servomotor angetriebenes Robotergetriebe ermöglicht eine präzise Kontrolle der Bewegung des dritten Schwenkarmes, so dass die Halteeinrichtung der erfindungsgemässen Transfervorrichtung möglichst genau über einem zu transferierenden Werkstück positioniert werden kann und dieses anschliessend in ein Werkzeug einer weiteren Presse präzise abzulegen. Zudem kann ein Werkstück beim Ablegen in ein Werkzeug einer Presse einseitig aktiv angehoben werden, um das Ablegen zu erleichtern.

Bevorzugt ist die Halteeinrichtung relativ zum dritten Schwenkarm über eine sechste Drehachse, welche im Wesentlichen rechtwinklig zur dritten Drehachse steht, schwenkbar gelagert.

Dadurch lässt sich die Orientierung der Halteeinrichtung zusätzlich in einer zweiten Ebene verändern. Dies ermöglicht ein effizientes Erfassen von Werkstücken durch die Halteeinrichtung, da deren Orientierung an Werkstücke angepasst werden kann, die eine mit der Horizontalebene nicht parallele Oberfläche aufweisen. Dies erhöht die Flexibilität beim Einsatz einer erfindungsgemässen Transfervorrichtung.

Vorzugsweise ist der erste Schlitten über mindestens einen Linearantrieb antreibbar. Dies ermöglicht einen möglichst einfachen und dennoch effizienten Antrieb des ersten Schlittens. Besonders bevorzugt wird der erste Schlitten über einen Zahnriemen und einen Servomotor angetrieben. Alternativ kann der erste Schlitten aber auch durch einen anderen Linearantrieb angetrieben werden, z.B. über einen Seilzug, einer Gewindestange, etc.

Die vorliegende Erfindung bezieht sich ferner auf eine Anordnung umfassend mindestens eine erste Presse und mindestens eine zweite Presse, welche mit Werkzeugen zum Pressen von Werkstücken versehen sind, sowie mindestens eine erfindungsgemässe Transfervorrichtung, Die mindestens eine Transfervorrichtung ist derart zwischen der mindestens einen ersten Presse und der mindestens einen zweiten Presse angeordnet, dass ein Werkstück vom Werkzeug der mindestens einen ersten Presse zum Werkzeug der mindestens einen zweiten Presse ohne Zwischenablage des Werkstücks transferiert werden kann.

Durch die erfindungsgemässe Anordnung können Werkstücke besonders effizient und zuverlässig von einem Werkzeug einer ersten Presse auf ein Werkzeug einer zweiten Presse transferiert werden, Die Transfervorrichtung ist vorzugsweise starr zwischen den beiden Pressen angeordnet. Alternativ kann die Vorrichtung auch zwischen den beiden Pressen verfahrbar angeordnet sein, wobei diese beispielsweise auf einem Schlitten an einer Führungsschiene, welche oberhalb der Werkzeuge der Pressen angeordnet ist, angebracht ist. Alternativ kann die Transfervorrichtung jedoch auch auf einem Wagen oder Schlitten, der entlang einer Führungsschiene oder einer Führungsnut auf dem Boden verfahrbar ist, angeordnet sein.

Aus der nachfolgenden Detailbesrhreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung einer ersten Ausführungsform einer erfindungsgemässen Transfervorrichtung;
- Fig. 2: eine schematische Darstellung einer zweiten Ausführungsform einer erfindungsgemässen Transfervorrichtung;
- Fig. 3: eine perspektivische Darstellung der Ausführungsform gemäss Fig. 2;
- Fig. 4: eine Aufrisszeichnung des ersten Schwenkarms der Ausführungsform nach Fig. 3.

Grundsätzlich sind in den Figuren gleiche Teile mit gleichen Bezugszeichen versehen.

### Wege zur Ausführung der Erfindung

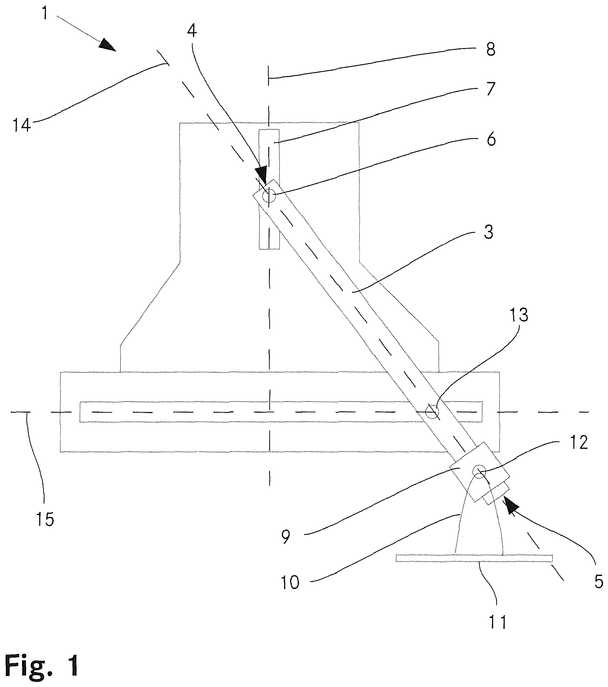

Die Figur 1 zeigt eine schematische Darstellung einer ersten Ausführungsform einer erfindungsgemässen Transfervorrichtung 1. Die Transfervorrichtung 1 umfasst einen Rahmen 2 sowie einen ersten Schwenkarm 3. Der erste Schwenkarm 3 ist über eine erste Drehachse 6 schwenkbar mit dem Rahmen 2 verbunden, wobei sich die erste Drehachse 6 im Bereich eines ersten Endes 4 des ersten Schwenkarms 3 befindet. Die erste Drehachse 6 ist über eine erste Linearführung 7 in horizontaler Richtung entlang einer ersten Linearachse 8 verschiebbar gelagert.

Auf dem ersten Schwenkarm 3 ist ein entlang einer zweiten Linearachse 14 linear verschiebbarer erster Schlitten 9 angebracht. Die zweite Linearachse 14 befindet sich auf dem ersten Schwenkarm 3 und wird entsprechend mit diesem zusammen bewegt. Der erste Schlitten 9 verfügt über einen geeigneten Antrieb, um eine lineare Verschiebung entlang der zweiten Linearachse 14 auf dem ersten Schwenkarm 3 zu ermöglichen. Über eine dritte Drehachse 12 ist eine Haltevorrichtung 10 drehbar mit dem ersten Schlitten 9 verbunden. Die Haltevorrichtung 10 ist zum Erfassen von Werkstücken 11 geeignet. Typischerweise umfasst die Haltevorrichtung 10 sog. Saugerbrücken.

In einem Bereich, der vom ersten Ende 4 gesehen in Richtung eines zweiten Endes 5 des ersten Schwenkarms 3 liegt, ist der erste Schwenkarm mit einem entlang einer dritten Linearachse 15 in horizontaler Richtung am Rahmen 2 verschiebbar gelagerten zweiten Drehachse 13 verbunden. Die zweite Drehachse 13 ist über einen ersten Linearantrieb 21 relativ zum Rahmen 2 entlang der dritten Linearachse 15 bewegbar. Durch eine Verschiebung der zweiten Drehachse 13 entlang der dritten Linearachse 15 kann der erste Schwenkarm 3 relativ zum Rahmen 2 verschwenkt werden. Gleichzeitig mit der horizontalen Verschiebung der zweiten Drehachse 13 erfolgt eine Drehbewegung des ersten Schwenkarms um die zweite Drehachse 13 sowie eine Schwenkbewegung um die erste Drehachse 6. Da die zweite Drehachse 13 fest am ersten Schwenkarm 3 angeordnet ist, erfolgt gleichzeitig auch eine horizontale Verschiebung der ersten Drehachse 6 entlang der ersten Linearführung 7.

Über eine koordinierte Drehung der dritten Drehachse 12 kann ein an der Halteeinrichtung 10 angebrachtes Werkstück 11 in einer gleichbleibenden Ausrichtung im Raum gehalten werden. Die dritte Drehachse 12 ist dabei mit einem Antrieb versehen (nicht dargestellt) um eine aktive Drehbewegung der Halteeinrichtung 10 zu ermöglichen.

Weiter kann durch eine koordinierte lineare Verschiebung des ersten Schlittens 9 entlang des ersten Schwenkarms 3 während einer Schwenkbewegung der Abstand zwischen einem durch die Halteeinrichtung 10 ergriffenen Werkstück 11 und dem Rahmen 2 konstant gehalten werden, d.h. dass das Werkstück 11 während der Schwenkbewegung des ersten Schwenkarmes 3 eine im Wesentlichen geradlinige translatorische Bewegung vollzieht. Alternativ kann das Werkstück 11 während der Schwenkbewegung natürlich auch z.B. in Richtung des ersten Endes 4 des ersten Schwenkarmes 3 bewegt werden, falls dies nötig sein sollte.

Im Prinzip genügt lediglich die Verschiebung der zweiten Drehachse 13 entlang der dritten Linearachse 15 um eine Schwenkbewegung des ersten Schwenkarmes 3 zu ermöglichen, d.h. die erste Drehachse 6 und die zweite Drehachse 13 benötigen keinen Antrieb. Auch die vertikale Bewegung der ersten Drehachse 6 entlang der ersten Linearachse 8 erfordert keinen Antrieb. Allerdings wird zur besseren Lastenverteilung sowie zur besseren Kontrolle des Bewegungsablaufs vorzugsweise auch die erste Drehachse 6 mit einem Antrieb versehen.

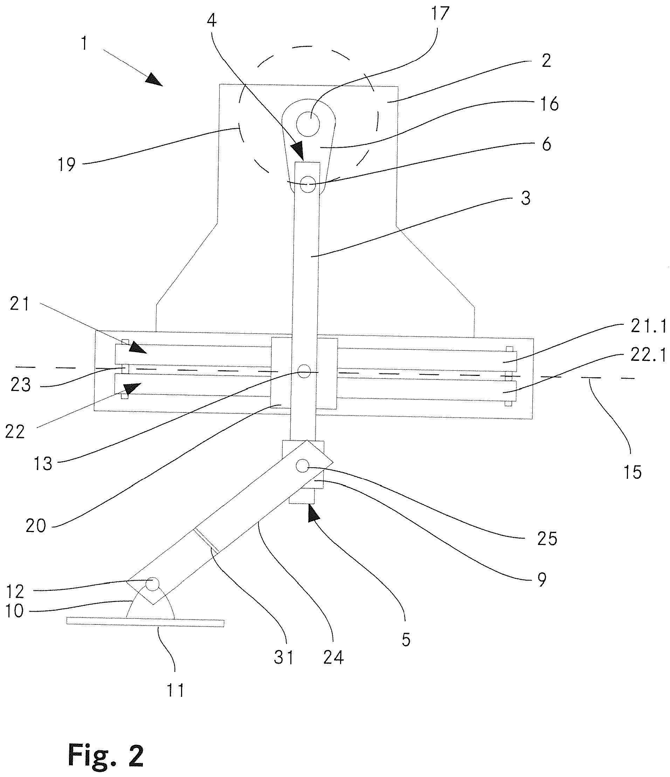

Die Figur 2 zeigt eine zweite Ausführungsform der erfindungsgemässen Transfervorrichtung 1. Bei dieser Ausführungsform ist der erste Schwenkarm 3 über die erste Drehachse 6 schwenkbar mit einem zweiten Schwenkarm 16 verbunden, welcher über eine vierte Drehachse 17 drehbar auf dem Rahmen 2 angeordnet ist. Die vierte Drehachse 17 ist parallel zur ersten Schwenkachse 6 angeordnet. Der zweite Schwenkarm 16 wirkt dabei als Exzenter, mit dem sich die erste Drehachse 6 entlang einer Kreisbahn 19 um die vierte Drehachse 17 herum bewegen lässt. Dadurch wird einerseits eine vertikale Verschiebung der ersten Drehachse 6 ermöglicht, andererseits ist auch eine horizontale Verschiebung derselben möglich. Vorzugsweise wird nur die vierte Drehachse 17, welche als Planetengetriebe ausgestaltet sein kann, über einen Servomotor angetrieben, während die erste Drehachse 6 passiv mitläuft.

Die zweite Drehachse 13 ist bei dieser Ausführungsform der Erfindung auf einem zweiten Schlitten 20 angeordnet. Der zweite Schlitten 20 ist über zwei Linearantriebe 21, 22 in horizontaler Richtung entlang der dritten Linearachse 15 verschiebbar. Insbesondere kann der zweite Schlitten 20 auf Schienen gelagert sein. Die zwei Linearantriebe 21, 22 umfassen beim gezeigten Ausführungsbeispiel zwei Zahnriemen 21.1, 22.1 sowie zwei Servomotoren (nicht gezeigt), Durch die Verwendung von zwei unabhängigen Linearantrieben 21, 22 kann eine gewisse Redundanz erreicht werden. Ausserdem kann auch die Last auf zwei Motoren verteilt werden, wodurch diese kleiner ausgestaltet werden können. Beide Zahnriemen laufen auf einer gemeinsamen Welle 23, auf welche eine gemeinsame Sicherheitsbremse (nicht gezeigt) einwirkt. Dadurch kann die Sicherheit beim Betrieb der Transfervorrichtung 1 erhöht werden, da die Schwenkbewegung des ersten Schwenkarms 3 schnell und zuverlässig angehalten werden kann.

Die Haltevorrichtung 10 ist über die dritte Drehachse 12 mit einem dritten Schwenkarm 24 drehbar verbunden. Der dritte Schwenkarm 24 ist seinerseits über eine fünfte Drehachse 25 schwenkbar auf dem ersten Schlitten 9 angeordnet. Der dritte Schwenkarm 25 verfügt zudem über eine sechste Drehachse 31, welche rechtwinklig zur dritten Drehachse 12 steht. Dadurch lässt sich die Haltevorrichtung 10 in einer zusätzlichen Ebene drehen. Durch diesen zusätzlichen dritten Schwenkarm 25 sowie der sechsten Drehachse 31 gewinnt die Transfervorrichtung 1 insgesamt an Freiheitsgraden, was einen flexibleren Einsatz ermöglicht.

Ein Fachmann wird erkennen, dass einzelne Elemente der Ausführungsform der Figur 2 mit der Ausführungsform der Figur 1 verwendet werden können. So kann z.B. der zweite Schwenkarm 16 bei einer Transfervorrichtung 1 mit nur einem Linearantrieb 21 verwendet werden etc.

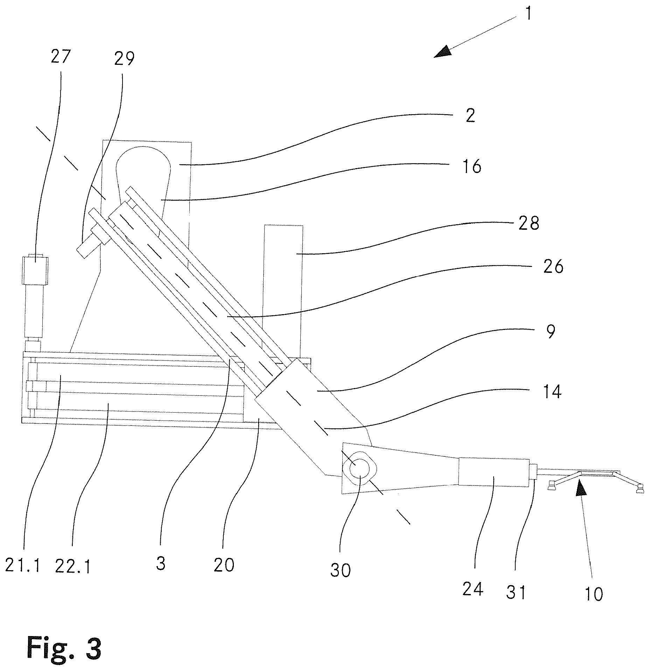

Auf der Figur 3 ist eine Ansicht der Ausführungsform der Transfervorrichtung 1 der Figur 2 gezeigt. Auf dieser Figur gut ersichtlich sind die verschiedenen Servomotoren 27, 28, 29, 30, welche zum Antrieb der verschiedenen Komponenten dienen. Ein erster Servomotor 27 treibt den ersten Zahnriemen 21.1 an. Ein zweiter Servomotor 28 dient zum Antrieb des zweiten Zahnriemens 22.1. Über die beiden Zahnriemen 21.1, 22.1 kann der erste Schlitten 20 in horizontaler Richtung gegenüber dem Rahmen 2 verfahren werden.

Ein dritter Servomotor 29 treibt einen dritten Zahnriemen 26 an, der als Linearantrieb zum Verschieben des ersten Schlittens 9 entlang der zweiten Linearachse 14 auf dem ersten Schwenkarm 3 dient. Über einen vierten Servomotor 30 kann schliesslich der dritte Schwenkarm 24 gegenüber dem ersten Schlitten 9 geschwenkt werden. Die fünfte Drehachse 25, welches in der Darstellung durch den vierten Servomotor 30 verdeckt wird, ist dabei vorzugsweise als Robotergetriebe ausgebildet. Ferner verfügt auch die Halteeinrichtung 10 sowie die sechste Drehachse 31 über mindestens einen Antrieb (nicht gezeigt), um die Halteeinrichtung 10 gegenüber dem dritten Schwenkarm 24 in zwei Ebenen drehen zu können.

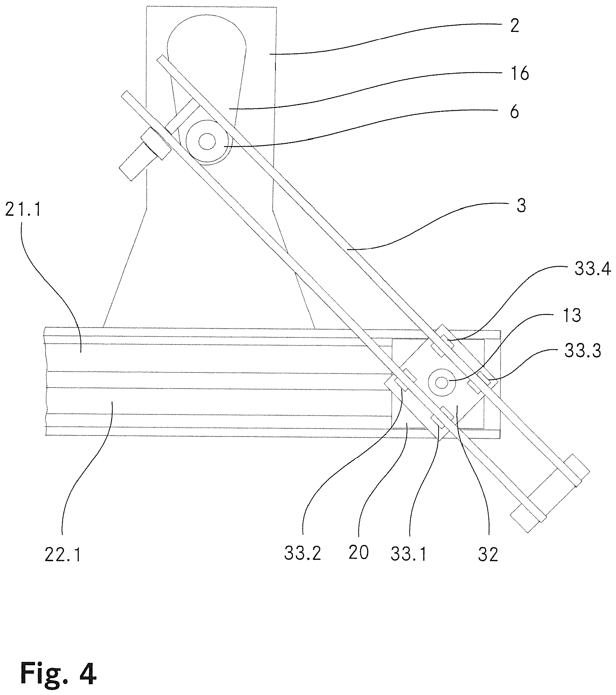

Auf der Figur 4 ist eine Åufrisszeichnung des ersten Schwenkarms 3 der Ausführungsform nach Figur 3 gezeigt. Gut sichtbar ist der zweite Schwenkarm 16, weicher gegenüber dem Rahmen 2 drehbar und über die erste Drehachse 6 schwenkbar mit dem ersten Schwenkarm 3 verbunden ist. Weiter ist die Ausgestaltung des zweiten Schlittens 20 gut ersichtlich. Über die zweite Drehachse 13 ist eine Plattform 32 drehbar mit dem zweiten Schlitten 20 verbunden. Über vier Gleitlager 33.1, 33.2, 33.3, 33.4 ist der erste Schwenkarm 3 verschiebbar auf der Plattform 32 gelagert. Durch diese Ausgestaltung kann der erste Schwenkarm 3 gegenüber dem zweiten Schlitten 20 sowohl gedreht als auch verschoben werden. Dadurch lässt sich die Länge des zweiten Schwenkarmes 16 verkürzen, da durch die Verschiebung des ersten Schwenkarms 3 relativ zum zweiten Schlitten 20 ein Teil der nötigen vertikalen Verschiebung der ersten Drehachse 6 kompensiert werden kann.

## Patentansprüche

1. Transfervorrichtung für ein Werkstück (11), insbesondere zum Transferieren von Werkstücken (11) zwischen Werkzeugen von zwei benachbarten Pressen, umfassend:
a) einen Rahmen (2);
b) einen ersten Schwenkarm (3) mit einem ersten Ende (4) und einem zweiten Ende (5);
c) eine erstes Drehachse (6), welches das erste Ende (4) des ersten Schwenkarms (3) schwenkbar mit dem Rahmen (2) verbindet;
d) einen ersten Schlitten (9), der auf dem Schwenkarm (3) entlang einer zweiten Linearachse (14) linear verschiebbar angeordnet ist;
e) eine Halteeinrichtung (10) für ein Werkstück (11), welche relativ zum Schwenkarm (3) über eine dritte Drehachse (12) drehbar mit dem ersten Schlitten (9) verbunden ist;
f) eine im Wesentlichen in horizontaler Richtung am Rahmen (2) verschiebbar gelagerte zweite Drehachse (13), wobei der Schwenkarm (3) in einem Bereich, der vom ersten Ende (4) her in Richtung des zweiten Endes (5) liegt, drehbar mit der zweiten Drehachse (13) verbunden ist,
**dadurch gekennzeichnet, dass**
g) der erste Schwenkarm (3) über die erste Drehachse (6) relativ zu einem zweiten Schwenkarm (16) drehbar gelagert ist, wobei der zweite Schwenkarm (16) über eine vierte Drehachse (17) drehbar auf dem Rahmen (2) gelagert ist, wobei die vierte Drehachse (17) vorzugsweise parallel zur ersten Drehachse (6) steht.

2. Transfervorrichtung nach Anspruch 1, **dadurch gekennzeichnet, dass** die erste Drehachse (6) relativ zum Rahmen (2) im Wesentlichen in vertikaler Richtung verschiebbar gelagert ist.

3. Transfervorrichtung nach einem der Ansprüche 1 oder 2, **dadurch gekennzeichnet, dass** die erste Drehachse (3) und die zweite Drehachse (13) parallel zueinander stehen.

4. Transfervorrichtung nach Anspruch 1, **dadurch gekennzeichnet, dass** die vierte Drehachse (17) als Planetengetriebe, welches über einen Servomotor angetrieben wird, oder als Torquemotor ausgebildet ist.

5. Transfervorrichtung nach einem der Ansprüche 1 bis 4, **dadurch gekennzeichnet, dass** die erste Drehachse (6) als Wälzlager, insbesondere als Kugellager ausgebildet ist.

6. Transfervorrichtung nach einem der Ansprüche 1 bis 5, **dadurch gekennzeichnet, dass** die erste Drehachse (6) über keinen Antrieb verfügt.

7. Transfervorrichtung nach einem der Ansprüche 1 bis 6, **dadurch gekennzeichnet, dass** die zweite Drehachse (13) auf einem zweiten Schlitten (20) angeordnet ist, welcher über mindestens einen Linearantrieb (21, 22) im Wesentlichen in horizontaler Richtung entlang einer dritten Linearachse (15) relativ zum Rahmen (2) verfahrbar ist.

8. Transfervorrichtung nach Anspruch 7, **dadurch gekennzeichnet, dass** der zweite Schlitten (20) über zwei vorzugsweise unabhängige Linearantriebe (21, 22) relativ zum Rahmen (2) verfahrbar ist.

9. Transfervorrichtung nach einem der Ansprüche 7 oder 8, **dadurch gekennzeichnet, dass** jeder der mindestens einen Linearantriebe (21, 22) über einen Zahnriemen (21.1, 22.1) sowie einen Antriebsmotor verfügt.

10. Transfervorrichtung nach Anspruch 8 und 9, **dadurch gekennzeichnet, dass** beide Zahnriemen (21.1, 22.1) über mindestens eine gemeinsame Welle (23) verfügen, auf welche mindestens eine Sicherheitsbremse einwirkt.

11. Transfervorrichtung nach einem der Ansprüche 1 bis 10, **dadurch gekennzeichnet, dass** die Halteeinrichtung (10) über die dritte Drehachse (12) drehbar an einem dritten Schwenkarm (24) angeordnet ist, welcher über eine fünfte Drehachse (25) drehbar am ersten Schwenkarm (3) gelagert ist, wobei die dritte Drehachse (12) und die fünfte Drehachse (25) parallel zur ersten Drehachse (6) sind.

12. Transfervorrichtung nach einem der Ansprüche 1 bis 11, **dadurch gekennzeichnet, dass** die dritte Drehachse (12) als Robotergetriebe ausgebildet ist, wobei das Robotergetriebe über einen Servomotor antreibbar ist.

13. Transfervorrichtung nach einem der Ansprüche 11 oder 12, **dadurch gekennzeichnet, dass** die Halteeinrichtung (10) relativ zum dritten Schwenkarm (24) über eine sechste Drehachse (31), welche im Wesentlichen rechtwinklig zur dritten Drehachse (12) steht, schwenkbar ist.

14. Transfervorrichtung nach einem der Ansprüche 1 bis 13, **dadurch gekennzeichnet, dass** der erste Schlitten (9) über mindestens einen Linearantrieb antreibbar ist.

15. Anordnung umfassend mindestens eine erste Presse und mindestens eine zweite Presse, welche mit Werkzeugen zum Pressen von Werkstücken versehen sind, sowie mindestens eine Transfervorrichtung (1) nach einem der Ansprüche 1 bis 14, wobei die mindestens eine Transfervorrichtung (1) derart zwischen der mindestens einen ersten Presse und der mindestens einen zweiten Presse angeordnet ist, dass ein Werkstück (11) vom Werkzeug der mindestens einen ersten Presse zum Werkzeug der mindestens einen zweiten Presse ohne Zwischenablage des Werkstücks (11) transferiert werden kann.

## Claims

1. A transfer device for a workpiece (11), in particular for transferring workpieces (11) between tools of two adjacent presses, said transfer device including:
a) a frame (2);
b) a first pivot arm (3) with a first end (4) and a second end (5);
c) a first rotational axis (6) which connects the first end (4) of the first pivot arm (3) pivotably to the frame (2);
d) a first slide (9) which is arranged on the pivot arm (3) so as to be linearly displaceable along a second linear axis (14);
e) a holding device (10) for a workpiece (11) which is connected to the first slide (9) so as to be rotatable relative to the pivot arm (3) by means of a third rotational axis (12);
f) a second rotational axis (13) which is mounted on the frame (2) so as to be displaceable substantially in the horizontal direction, wherein the pivot arm (3) is connected to the second pivot axis (13) so as to be rotatable in a region which is located in the direction of the second end (5) from the first end (4)
**characterized in that**
g) the first pivot arm (3) is mounted so as to be rotatable relative to a second pivot arm (16) by means of the first rotational axis (6), wherein the second pivot arm (16) is mounted on the frame (2) so as to be rotatable by means of a fourth rotational axis (17), wherein the fourth rotational axis (17) is preferably parallel to the first rotational axis (6).

2. The transfer device as claimed in claim 1, **characterized in that** the first rotational axis (6) is mounted so as to be displaceable substantially in the vertical direction relative to the frame (2).

3. The transfer device as claimed in either of claims 1 or 2, **characterized in that** the first rotational axis (3) and the second rotational axis (13) are parallel to one another.

4. The transfer device as claimed in claim 1, **characterized in that** the fourth rotational axis (17) is realized as planetary gearing which is driven by a servomotor, or is realized as a torque motor.

5. The transfer device as claimed in one of claims 1 to 4, **characterized in that** the first rotational axis (6) is realized as a roller bearing, in particular as a ball bearing.

6. The transfer device as claimed in one of claims 1 to 5, **characterized in that** the first rotational axis (6) does not have a drive.

7. The transfer device as claimed in one of claims 1 to 6, **characterized in that** the second rotational axis (13) is arranged on a second slide (20) which is movable by means of at least one linear drive (21, 22) in a substantially horizontal direction along a third linear axis (15) relative to the frame (2).

8. The transfer device as claimed in claim 7, **characterized in that** the second slide (20) is movable by means of two preferably independent linear drives (21, 22) relative to the frame (2).

9. The transfer device as claimed in either of claims 7 or 8, **characterized in that** each of the at least one linear drives (21, 22) has a toothed belt (21.1, 22.1) and a drive motor.

10. The transfer device as claimed in claim 8 or 9, **characterized in that** both toothed belts (21.1, 22.1) have at least one common shaft (23), on which at least one safety brake acts.

11. The transfer device as claimed in one of claims 1 to 10, **characterized in that** the holding device (10) is arranged so as to be rotatable by means of the third rotational axis (12) on a third pivot arm (24) which is mounted on the first pivot arm (3) so as to be rotatable by means of a fifth rotational axis (25), wherein the third rotational axis (12) and the fifth rotational axis (25) are parallel to the first rotational axis (6).

12. The transfer device as claimed in one of claims 1 to 11, **characterized in that** the third rotational axis (12) is realized as robot gearing, wherein the robot gearing is drivable by means of a servomotor.

13. The transfer device as claimed in either of claims 11 or 12, **characterized in that** the holding device (10) is pivotable relative to the third pivot arm (24) by means of a sixth rotational axis (31) which is substantially at right angles to the third rotational axis (12).

14. The transfer device as claimed in one of claims 1 to 13, **characterized in that** the first slide (9) is drivable by means of at least one linear drive.

15. An arrangement including at least one first press and at least one second press which are provided with tools for pressing workpieces, as well as at least one transfer device (1) as claimed in one of claims 1 to 14, wherein the at least one transfer device (1) is arranged in such a manner between the at least one first press and the at least one second press that a workpiece (11) is able to be transferred from the tool of the at least one first press to the tool of the at least one second press without the workpiece (11) being deposited in between.

## Revendications

1. Dispositif de transfert pour une pièce (11), en particulier pour le transfert de pièces (11) entre des outils de deux presses adjacentes, comprenant :
a) un cadre (2) ;
b) un premier bras pivotant (3) avec une première extrémité (4) et une deuxième extrémité (5) ;
c) un premier axe de rotation (6) qui relie la première extrémité (4) du premier bras pivotant (3) de manière pivotante au cadre (2) ;
d) un premier chariot (9) qui est disposé de manière déplaçable linéairement sur le bras pivotant (3) le long d'un deuxième axe linéaire (14) ;
e) un dispositif de retenue (10) pour une pièce (11), qui est connecté au premier chariot (9) de manière à pouvoir tourner par rapport au bras pivotant (3) par le biais d'un troisième axe de rotation (12) ;
f) un deuxième axe de rotation (13) supporté de manière déplaçable sensiblement dans la direction horizontale sur le cadre (2), le bras pivotant (3) étant connecté de manière rotative au deuxième axe de rotation (13) dans une région qui est située à partir de la première extrémité (4) dans la direction de la deuxième extrémité (5), **caractérisé en ce que**
g) le premier bras pivotant (3) est supporté de manière rotative par le biais du premier axe de rotation (6) par rapport à un deuxième bras pivotant (16), le deuxième bras pivotant (16) étant supporté de manière rotative par le biais d'un quatrième axe de rotation (17) sur le cadre (2), le quatrième axe de rotation (17) étant de préférence parallèle au premier axe de rotation (6) .

2. Dispositif de transfert selon la revendication 1, **caractérisé en ce que** le premier axe de rotation (6) est supporté de manière déplaçable essentiellement dans la direction verticale par rapport au cadre (2) .

3. Dispositif de transfert selon l'une quelconque des revendications 1 ou 2, **caractérisé en ce que** le premier axe de rotation (3) et le deuxième axe de rotation (13) sont parallèles l'un à l'autre.

4. Dispositif de transfert selon la revendication 1, **caractérisé en ce que** le quatrième axe de rotation (17) est réalisé sous forme de transmission planétaire qui est entraînée par le biais d'un servomoteur, ou sous forme de moteur couple.

5. Dispositif de transfert selon l'une quelconque des revendications 1 à 4, **caractérisé en ce que** le premier axe de rotation (6) est réalisé sous forme de palier à roulement, en particulier sous forme de roulement à billes.

6. Dispositif de transfert selon l'une quelconque des revendications 1 à 5, **caractérisé en ce que** le premier axe de rotation (6) ne dispose pas d'entraînement.

7. Dispositif de transfert selon l'une quelconque des revendications 1 à 6, **caractérisé en ce que** le deuxième axe de rotation (13) est disposé sur un deuxième chariot (20) qui peut être déplacé par le biais d'au moins un entraînement linéaire (21, 22) essentiellement dans la direction horizontale le long d'un troisième axe linéaire (15) par rapport au cadre (2).

8. Dispositif de transfert selon la revendication 7, **caractérisé en ce que** le deuxième chariot (20) peut être déplacé par le biais de deux entraînements linéaires de préférence indépendants (21, 22) par rapport au cadre (2).

9. Dispositif de transfert selon l'une quelconque des revendications 7 ou 8, **caractérisé en ce que** chacun des au moins un entraînement linéaire (21, 22) dispose d'une couronne dentée (21.1, 22.1) ainsi que d'un moteur d'entraînement.

10. Dispositif de transfert selon les revendications 8 et 9, **caractérisé en ce que** les deux courroies dentées (21.1, 22.1) disposent d'au moins un arbre commun (23) sur lequel agit au moins un frein de sécurité.

11. Dispositif de transfert selon l'une quelconque des revendications 1 à 10, **caractérisé en ce que** le dispositif de retenue (10) est disposé de manière rotative par le biais du troisième axe de rotation (12) sur un troisième bras pivotant (24) qui est supporté de manière rotative par le biais d'un cinquième axe de rotation (25) sur le premier bras pivotant (3), le troisième axe de rotation (12) et le cinquième axe de rotation (25) étant parallèles au premier axe de rotation (6).

12. Dispositif de transfert selon l'une quelconque des revendications 1 à 11, **caractérisé en ce que** le troisième axe de rotation (12) est réalisé sous forme de transmission à robot, la transmission à robot pouvant être entraînée par le biais d'un servomoteur.

13. Dispositif de transfert selon l'une quelconque des revendications 11 ou 12, **caractérisé en ce que** le dispositif de retenue (10) peut pivoter par rapport au troisième bras pivotant (24) par le biais d'un sixième axe de rotation (31) qui est sensiblement perpendiculaire au troisième axe de rotation (12).

14. Dispositif de transfert selon l'une quelconque des revendications 1 à 13, **caractérisé en ce que** le premier chariot (9) peut être entraîné par le biais d'au moins un entraînement linéaire.

15. Agencement comprenant au moins une première presse et au moins une deuxième presse qui sont pourvues d'outils pour presser des pièces, ainsi qu'au moins un dispositif de transfert (1) selon l'une quelconque des revendications 1 à 14, l'au moins un dispositif de transfert (1) étant disposé entre l'au moins une première presse et l'au moins une deuxième presse de telle sorte qu'une pièce (11) puisse être transférée depuis l'outil de l'au moins une première presse jusqu'à l'outil de l'au moins une deuxième presse sans devoir stocker temporairement la pièce (11) .
